# EUROPÄISCHE PATENTANMELDUNG

(11) **EP 1 286 241 A1**
(43) Veröffentlichungstag der Anmeldung: **26.02.2003**
(21) Anmeldenummer: 02016547.8
(22) Anmeldetag: 24.07.2002
(51) Int. Cl.: G05F 1/46

(54) **Verbesserter Netzteileingangsschaltkreis hinsichtlich Netzstörungen**

(30) Priorität: 24.07.2001 DE 10134976
(71) Anmelder: Philips Corporate Intellectual Property GmbH, 20099 Hamburg (DE); Koninklijke Philips Electronics N.V., 5621 BA Eindhoven (NL)
(72) Erfinder: Elferich, Reinhold c/oPhilips Co. Int. Prop. GmbH, 52066 Aachen (DE); Schetters, Kees c/o Philips Corp. Int. Prop. GmbH, 52066 Aachen (DE)
(74) Vertreter: Volmer, Georg, Dipl.-Ing.

(57) **Zusammenfassung**

Eine Netzteilschaltung und ein Schaltnetzteil mit einer Netzteileingangsschaltung werden vorgestellt. Bekannte Netzteilschaltungen weisen einen mit einer Wechselspannung gespeisten Gleichrichter und eine erste Glättungskapazität auf. Um eine Schaltung anzugeben, die zum Betrieb über einen weiten Spannungsbereich geeignet ist, wird vorgeschlagen, dass mindestens eine zweite Kapazität vorgesehen ist, die durch ein Schaltelement so mit den Lastanschlüssen verbunden ist, dass beim Absinken der Spannung an den Lastanschlüssen unter eine Spannungsschwelle die zweite Kapazität mit den Lastanschlüssen verbunden wird. Weiterbildungen umfassen eine Einrichtung zur Ladung der zweiten Kapazität, die bevorzugt mit einer Einrichtung zur Begrenzung der Spannung an der zweiten Kapazität auf ein Ladeschwellenwert ausgerüstet ist. Durch geeignete Wahl des Ladeschwellenwertes kann als zweite Kapazität ein Kondensator verwendet werden, der trotz eines hohen Kapazitätswertes aufgrund der relativ niedrigen Spannungsfestigkeit eine geringe Baugröße und geringe Bauteilkosten aufweist.

## Beschreibung

Die Erfindung betrifft eine Netzteilschaltung sowie ein Schaltnetzteil mit einer Netzteil eingangsschaltung.

Netzteilschaltungen dienen zum Anschluss einer Last an eine Spannungs- bzw. Stromversorgung, insbesondere an das jeweilige Stromversorgungsnetz.

Bekannte Netzteilschaltungen zur Versorgung einer Last mit einer Gleichspannung weisen hierbei einen Anschluss an eine Wechselspannungsversorgung - z.B. das Stromversorgungsnetz - und einen durch die Wechselspannung gespeisten Gleichrichter auf. Zudem enthalten die bekannten Netzteilschaltungen weitere Elemente, darunter mindestens eine erste Glättungskapazität. Hierbei handelt es sich um einen Kondensator mit einem hohen Kapazitätswert, oft ein Elektrolyt-Kondensator, der üblicherweise an den Lastanschlüssen parallel zur Last geschaltet ist und durch die gleichgerichtete Spannung aufgeladen bzw. über die Last entladen wird. Dieser Kondensator bewirkt somit eine Glättung der Ausgangsspannung. Gegebenenfalls enthält die Netzteilschaltung zudem weitere Elemente, beispielsweise eine Filter-Impedanz sowie einen Widerstand zur Begrenzung der Einschaltstromspitze.

Einfache Netzteilschaltungen können zur Lieferung einer ungeregelten Spannung für einen elektrischen Verbraucher dienen. Netzteilschaltungen können aber auch als Bestandteil anderer Schaltungen auftreten, insbesondere als Netzteileingangsschaltung eines Schaltnetzteils. Schaltnetzteile arbeiten mit mindestens einem durch eine Zwischenkreisspannung gespeisten Umrichter, der üblicherweise einen Transformator speist. Durch geeignete Ansteuerung des Umrichters können geregelte Ausgangsspannungen erzeugt werden. In einem solchen Schaltnetzteil dient eine Netzteilschaltung wie oben beschrieben zur Lieferung der Zwischenkreisspannung. In diesem Fall sind die nachfolgenden Module des Schaltnetzteils als "Last" mit den Lastanschlüssen verbunden. Um diese beiden Einsatzmöglichkeiten für eine Netzteilschaltung im folgenden Text leichter zusammenfassen zu können, werden nachfolgend die Bezeichnungen "Last" und "Lastanschlüsse" verwendet, auch wenn damit auf nachgeschaltete Module eines Schaltnetzteils Bezug genommen wird.

Die Dimensionierung der Elemente einer Netzteilschaltung, insbesondere der Glättungskapazität, erfolgt anhand von vorgegebenen Spezifikationen für die Schaltung. Diese umfassen eingangsseitig Spezifikationen der Eingangswechselspannung (Minimal-, Nenn- und Maximalwerte für Spannung und Frequenz sowie Angaben über spezifizierte Spannungsstörungen) und ausgangsseitig Spezifikationen der Last (Minimal-, Nenn- und Maximalwerte für Strom, Spannung und Leistungsaufnahme). Um diesen Spezifikationen in jeder Hinsicht gerecht zu werden, muss die Netzteilschaltung so ausgelegt sein, dass sie auch im für den jeweils betrachteten Parameter ungünstigsten Betriebsbereich (worst case) die vorgegebenen Spezifikationen noch erfüllt.

Hinsichtlich der Glättungskapazität bedeutet dies beispielsweise, dass einerseits die Spannungsfestigkeit des verwendeten Kondensators so gewählt werden muss, dass diese auch dann ausreicht, wenn die Versorgungsspannung den maximal erlaubten Wert annimmt und gleichzeitig keine Ausgangsleistung entnommen wird. Andererseits muss der Kapazitätswert des Glättungskondensators ausreichend hoch gewählt werden, so dass eine ausreichend geglättete Spannung an den Lastanschlüssen anliegt. Falls die Anforderungen an die Schaltung dies vorsehen, muss zusätzlich sogar sichergestellt werden, dass beim Auftreten von spezifizierten Netzausfällen (z.B. 100% Netzausfall für die Dauer von 50 ms) die minimal erforderliche Ausgangsspannung auch bei maximaler Leistungsentnahme gewährleistet bleiben.

Wenn als Eingangswechselspannung ein weiter Spannungsbereich in Frage kommt, wird für die Erfüllung all dieser Anforderungen oft ein Kondensator benötigt, der sowohl hohe Spannungsfestigkeit als auch einen hohen Kapazitätswert aufweist. Dies führt zur Verwendung von Bauelementen enormer Größe, die auch entsprechend teuer sind. Soll eine Netzteilschaltung weltweit zum Anschluss an das Stromversorgungsnetz geeignet sein (world-wide mains), muss mit Effektivwerten der Eingangswechselspannung von minimal 85 V (spezifiziertes Minimum in USA) bis 265 V (spezifiziertes Maximum in Europa) gerechnet werden.

In der US-A-4,001,668 ist ein elektrischer Rasierer mit einer Netzteilschaltung beschrieben. Für den Betrieb an verschiedenen Eingangs-Wechselspannungen ist eine Schalteinheit vorgesehen, die aus einer einweggleichgerichteten Netzeingangsspannung eine Last (Motor) speist. Parallel zur Last liegt ein Filterkondensator. Die Lastspannung wird auf einen Wert unterhalb einer Spannungsschwelle geregelt, wobei die Spannungsschwelle unterhalb der Eingangsspitzenspannung liegt. Diese Schaltung ermöglicht den Betrieb eines Verbrauchers an verschiedenen Eingangs-Wechselspannungen.

In der US-A-4,811,190 ist eine Schaltung zur Verlängerung des Betriebs einer elektrischen Last nach Unterbrechung der Stromversorgung beschrieben. Die Schaltung wird durch eine Gleichstromquelle gespeist und enthält Speicherkapazitäten, die durch die Gleichspannungsquelle geladen und mit einer Regelschaltung auf einer vorbestimmten Spannung gehalten werden. Bei Unterbrechung der Stromversorgung und Unterschreiten einer Spannungsschwelle bewirkt eine Umschaltvorrichtung mit einer Diode und einem SCR (silicon controlled rectifier), dass die Speicherkapazitäten in Reihe geschaltet und diese Reihenschaltung - parallel zur ggf. vorhandenen Filterkapazitäten - parallel zur Last gelegt wird und diese speist, wobei die Filterkapazitäten sich entladen.

Es ist Aufgabe der Erfindung, eine Netzteilschaltung und ein Schaltnetzteil mit einer Netzteileingangsschaltung anzugeben, die zum Betrieb über einen weiten Spannungsbereich geeignet ist.

Diese Aufgabe wird gelöst durch eine Netzteilschaltung nach Anspruch 1 und ein Schaltnetzteil nach Anspruch 10. Abhängige Ansprüche beziehen sich auf vorteilhafte Ausführungsformen der Erfindung.

Erfindungsgemäß ist mindestens eine zweite Kapazität vorgesehen. Diese zweite Kapazität ist durch ein Schaltelement so mit den Lastanschlüssen verbunden, dass sie erst bei Absinken der dortigen Spannung unterhalb einer Spannungsschwelle zugeschaltet wird.

Hierbei kann es sich um eine feste Spannungsschwelle handeln, es wird aber bevorzugt, dass das Schaltelement schaltet, sobald die Spannung an der zweiten Kapazität höher ist als die Spannung an den Lastanschlüssen. Hierfür kann als Schaltelement eine Diode eingesetzt werden.

Bevorzugt handelt es sich bei der zweiten Kapazität um ein Bauteil mit einem Kapazitätswert der mindestens ebenso hoch, besonders bevorzugt höher liegt als der Kapazitätswert der ersten Kapazität. Vorgeschlagen wird für die zweite Kapazität ein Kapazitätswert, der mindestens dem Doppelten des Kapazitätswerts der ersten Kapazität entspricht, bevorzugt dem mehr als fünffachen, besonders bevorzugt etwa dem zehnfachen Kapazitätswert. Hierbei ist es ausreichend, wenn die Spannungsfestigkeit der zweiten Kapazität bei oder knapp oberhalb der Spannungsschwelle liegt. Die zweite Kapazität wird bevorzugt maximal mit einer Spannung entsprechend einem Ladeschwellenwert betrieben, welcher deutlich unterhalb dem gemäß der Spezifikationen maximal zulässigen Wert der Spannung an der ersten Kapazität liegt. Es kann daher ein Bauteil mit einer - im Vergleich zur ersten Kapazität - geringeren Spannungsfestigkeit verwendet werden, was die Bauteilkosten und die Baugröße senkt.

Zur Vereinfachung der Darstellung wird hier stets von einer ersten und einer zweiten Kapazität gesprochen. Dem Fachmann ist aber bekannt, dass statt durch einzelne Kondensatoren solche Kapazitäten auch jeweils mit Schaltungen mit mehreren Kondensatoren realisiert werden können.

Gemäß einer Weiterbildung der Erfindung ist eine Einrichtung zur Ladung der zweiten Kapazität vorgesehen. Diese Einrichtung zur Ladung der zweiten Kapazität wird bevorzugt durch die gleichgerichtete Spannung gespeist. Es ist aber auch möglich, eine separate Energiequelle für die Versorgung der Ladungseinrichtung zu verwenden. Vorteilhafterweise kann die Ladeeinrichtung eine Einrichtung zur Begrenzung der Spannung an der zweiten Kapazität auf einen Ladeschwellenwert aufweisen, beispielsweise eine Zenerdiode.

Bevorzugt wird eine Ladeeinrichtung, die eine Schalteinheit umfasst, durch die die zweite Kapazität mit der gleichgerichteten Spannung verbunden werden kann. Das Laden der zweiten Kapazität erfolgt, indem die Schalteinheit die Kapazität mit der gleichgerichteten Spannung verbindet, wenn die Spannung an der Kapazität einen maximalen Ladeschwellenwert unterschreitet. Der Ladeschwellenwert dient dazu sicherzustellen, dass die zweite Kapazität nicht oberhalb dieses Spannungswerts betrieben wird, so dass ein Bauteil mit entsprechend geringer Spannungsfestigkeit verwendet werden kann.

Wenn die Schalteinheit die zweite Kapazität mit der gleichgerichteten Spannung verbindet, wird die zweite Kapazität aufgeladen. Dies gilt jedenfalls, so lange die gleichgerichtete Spannung höher ist als die Spannung an der zweiten Kapazität, was ggf. durch geeignete Mittel sichergestellt werden kann. Die Ladung der zweiten Kapazität erfolgt mit einer Ladezeitkonstante, die maßgeblich vom Zuleitungswiderstand, hier vor allem vom Durchgangswiderstand des Schalters abhängt. Es wird daher bevorzugt, einen Schalter mit einem geringen Widerstand zu verwenden, beispielsweise ein FET. Erreicht die Spannung an der zweiten Kapazität den Ladeschwellenwert, so trennt die Schalteinheit die zweite Kapazität ab.

Die Wahl der Spannungsschwelle ist von entscheidender Bedeutung für das Betriebsverhalten der Netzteilschaltung. Bei sehr hoch gewählter Spannungsschwelle, wenn also die - gemäß den Spezifikationen - maximal auftretende gleichgerichtete Spannung unterhalb der Spannungsschwelle liegt, ist die zweite Kapazität durch die Schalteinheit stets angekoppelt, so dass die Anordnung einer Parallelschaltung der ersten und zweiten Kapazität entsprechen würde. In diesem Fall ist aber die Schalteinheit sinnlos, so dass empfohlen wird, eine Spannungsschwelle zu wählen, die unterhalb der gemäß den Spezifikationen maximal möglichen gleichgerichteten Spannung liegt. Da der Grad an erzielbaren Einsparungen hinsichtlich Bauteilkosten und Baugröße der zweiten Kapazität hierbei davon bestimmt wird, wie weit unterhalb der maximal auftretenden gleichgerichteten Spannung die Spannungsschwelle gewählt wird, wird eine Spannungsschwelle bevorzugt, die deutlich, bevorzugt mindestens 25 %, besonders bevorzugt sogar mehr als 50 %, unterhalb der maximal auftretenden Spannung liegt.

Gemäß einer Weiterbildung wird empfohlen, dass die Spannungsschwelle so gewählt wird, dass sie bei oder über dem Spitzenwert der minimalen noch innerhalb der Spezifikation zulässigen Eingangsspannung liegt. Beispielsweise für world-wide-mains-Betrieb beträgt die minimale Spannung 85 V (Effektivwert), so dass hier die Spannungsschwelle bei 120 V oder höher liegen sollte.

Andererseits führt aber die Wahl einer extrem niedrigen Spannungsschwelle dazu, dass die zweite Kapazität im Extremfall nur bei längerfristigen Netzausfällen aktiv wird. Denn nur bei längerem Ausfall der Versorgungsspannung sinkt die gleichgerichtete und durch die zweite Kapazität geglättete Spannung an den Lastanschlüssen dann so weit ab, dass sie unter die Spannungsschwelle fällt. In diesem Fall dient die zweite Kapazität dann nur als Puffer für solche Netzausfälle.

Ein solches Verhalten kann zwar gewünscht sein. Bevorzugt wird jedoch die Wahl einer Spannungsschwelle zwischen den beiden vorgenannten Extremen, so dass zwar einerseits deutliche Einsparungen hinsichtlich Bauteilkosten und -größe erzielt werden, die Spannungsschwelle aber noch so hoch gewählt wird, dass sie gemäß den Spezifikation im stationären Bereich aktiv wird.

In einem üblichen Betriebsfall ist die Eingangswechselspannung bezüglich ihrer Amplitude für einen betrachteten Zeitraum näherungsweise konstant. Der Effektivwert liegt innerhalb des spezifizierten Bereiches, beispielsweise 85 - 140 V für das Stromversorgungsnetz in USA, 189 - 265 V für das Stromversorgungsnetz in Europa oder 85 - 265 V für weltweiten Betrieb. Bei einem angeschlossenen Verbraucher mit gegebener Leistungsaufnahme stellt sich dann im stationären Betrieb an den Ausgangsanschlüssen ein Zeitverlauf der Ausgangsspannung ein, der bei Vierweg-Gleichrichtung mit der doppelten Netzfrequenz periodisch ist. Bei einer sinusförmigen Eingangsspannung ergibt sich an der Glättungskapazität ein Spannungsverlauf, der dem Verlauf der gleichgerichteten Spannung in Form einer "hochgeklappten" Sinuskurve folgt, durch die erste Kapazität im Bereich der Maximalwerte aufgeladen wird und sich im Bereich der Nullstellen entlädt. Bei reiner Verwendung einer einzigen Glättungskapazität ergäbe sich so eine Ausgangsspannung, deren Welligkeit vom Kapazitätswert der ersten Kapazität abhängen würde.

Gemäß einer Weiterbildung der Erfindung wird nun der Einsatz der erfindungsgemäßen zweiten Kapazität mit einer Spannungsschwelle vorgeschlagen, die so gewählt ist, dass die Spannung an den Lastanschlüssen mindestens einmal pro Periode kleiner ist als der Ladungsschwellenwert, so dass die zweite Kapazität aktiv ist. Dies umfasst den Fall, dass der Spannungsschwellenwert so hoch gewählt ist, dass die zweite Kapazität bei typischen Eingangsspannungen ständig aktiv ist. Ebenso ist es aber möglich, die Schwelle so zu wählen, dass die Spannung an den Lastanschlüssen periodisch unter die Spannungsschwelle fällt, so dass die zweite Kapazität periodisch aktiv wird. Bei geeigneter Wahl der Spannungsschwelle führt dies zu einer weniger welligen Spannung an den Ausgangsanschlüssen. Denn sobald die Spannung unter die vorgegebene Spannungsschwelle fällt, wird die zweite Kapazität zugeschaltet, so dass sich eine wesentlich flachere Entladungskurve ergibt. Bis zum nächsten Aufladevorgang durch die folgende Halbwelle fällt die Spannung nur auf einen Minimalwert, der deutlich höher liegt als der Minimalwert bei alleiniger Verwendung der ersten Kapazität. So wird von der zweiten Kapazität hinsichtlich der Glättung der Spannung Gebrauch gemacht, ohne dass diese eine Spannungsfestigkeit aufweisen muss, die den gesamten Eingangsspannungsbereich abdeckt.

Eine Weiterbildung der Erfindung bezieht sich auf die Wahl der Spannungsschwelle speziell für den Betrieb an zwei Spannungsniveaus, beispielsweise den Betrieb an world-wide-mains, mit zwei typischen Eingangsspannungen, einerseits für Europa (189 V/230 V/265 V) bzw. USA (85 V/117V/140 V). Für ein Betrieb des Geräts ausgehend von diesen Vorgaben für Eingangsspannungen wird vorgeschlagen, die Spannungsschwelle in dem Bereich zwischen dem Scheitelwert der minimalen Spannung des unteren Spannungsniveaus und dem Scheitelwert der maximalen Eingangsspannung des unteren der beiden Betriebsspannungsniveaus zu legen. Für world-wide-mains bedeutet das eine Spannungsschwelle zwischen 120 V (dies ist der Spitzenwert, der sich bei der minimalen Eingangseffektivspannung von 85 V ergibt) und 200 V (entspricht effektiv 140 V, maximaler Effektivwert der Eingangsspannung des US-Netzes).

Nachfolgend werden Ausführungsformen der Erfindung anhand von Zeichnungen näher beschrieben. In den Zeichnungen zeigen
Fig. 1 ein Schaltbild einer ersten Ausführungsform einer Netzteilschaltung;
Fig. 2 ein Schaltbild eines Teils einer zweiten Ausführungsform einer Netzteilschaltung;
Fig. 3 eine Darstellung des Zeitverlaufes von Spannungen und Strömen in der Schaltung nach Fig. 1 in einem ersten Betriebsfall;
Fig. 4 Zeitverlauf von Spannungen und Strömen in der Schaltung nach Fig. 1 in einem zweiten Betriebsfall;
Fig. 5 Ein Schaltbild des Schaltnetzteils.

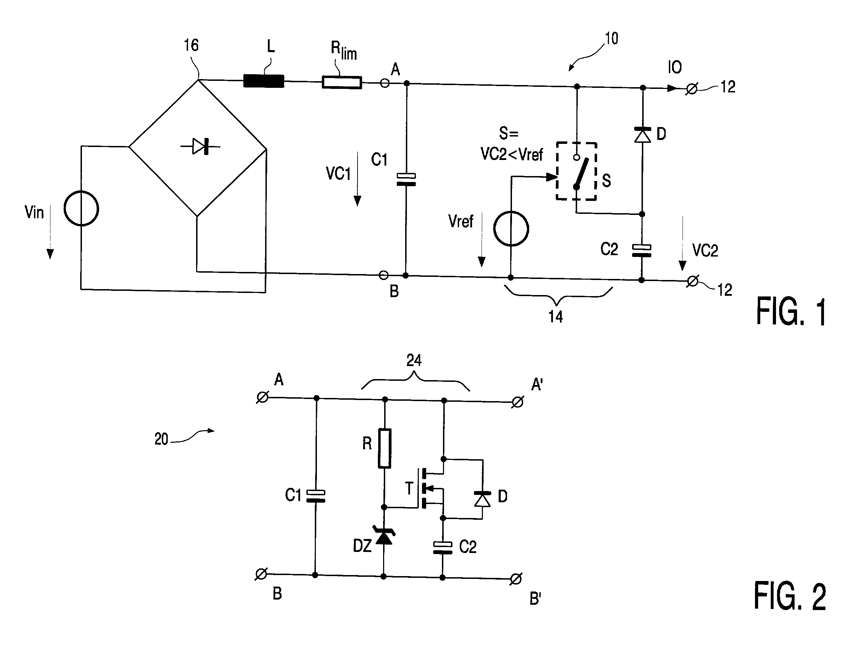

In Figur 1 ist eine erste Ausführungsform einer Netzteilschaltung 10 dargestellt. Diese weist eine Wechselspannungsversorgung Vᵢₙ auf, die eine Vierweg-Gleichrichterbrücke 16 speist. Dem Gleichrichter 16 nachgeschaltet ist eine Filterinduktivität L und ein Ohmscher Widerstand Rₗᵢₘ zur Begrenzung der Einschaltstromspitze. Eine Glättungskapazität C1 ist zwischen zwei Ausgangsklemmen 12 geschaltet, zwischen denen die Spannung V_{C1} abfällt.

Zusätzlich enthält die Schaltung 10 eine zweite Kapazität C2, über die die Spannung V_{C2} abfällt. Die zweite Kapazität C2 ist in Reihe mit einer Diode D zwischen den Ausgangsanschlüssen 12 angeschlossen. Sie wird durch die Ladeeinheit 14 geladen.

Die Ladeeinheit 14 besteht aus einem gesteuerten Schalter S und einer Referenzspannungsquelle V_{ref}. Der Schalter S ist geschlossen, solange die Spannung V_{C2} an der zweiten Kapazität C2 kleiner als die Referenzspannung V_{ref} ist. Bei geschlossenem Schalter S ist die Kapazität C2 parallel zur ersten Kapazität C1 zwischen den Ausgangsanschlüssen 12 angeschlossen.

Die Funktion der Schaltung nach Fig. 1 ist folgende: Der Gleichrichter 16 wird durch die sinusförmige Versorgungsgleichspannung Vᵢₙ gespeist, so dass am Ausgang des Gleichrichters eine sehr wellige gleichgerichtete Spannung entsteht, die aus "hochgeklappten" Sinushalbschwingungen besteht. Bei nicht vorhandener zweiten Kapazität C2 und Ladevorrichtung 14 würde nun allein die erste Kapazität C1 zur Glättung der Ausgangsspannung zwischen den Ausgangsanschlüssen 12 beitragen, wobei sich die Kapazität C1 im Bereich des Maximums der jeweiligen Halbwelle auflädt und beim Absinken der Versorgungsspannung über die an den Ausgangsanschlüssen 12 angeschlossene Last entlädt, so dass sich ein geglätteter, aber immer noch recht welliger Verlauf der Ausgangsspannung V_{C1} einstellen würde.

Der zusätzliche Einsatz der zweiten Kapazität C2 hat nun folgenden Einfluss: Wenn die Spannung V_{C1} zwischen den Ausgangsanschlüssen 12 unter den Wert der Spannung V_{C2} absinkt, auf die die zweite Kapazität C2 aufgeladen ist, wird die Diode D leitend und schaltet so die Kapazitäten C1, C2 zwischen den Ausgangsanschlüssen 12 parallel. C1 und C2 wirken dann gemeinsam wie eine große Kapazität, die sich - bei gleicher Leistungsaufnahme der Last entsprechend langsamer als C1 alleine - über die an den Ausgangsanschlüssen 12 angeschlossene Last entlädt.

Die Ladeschaltung 14 führt folgende Funktion aus: Sobald die Spannung V_{C2} unter den Wert der Referenzspannung V_{ref} absinkt, wird Schalter S geschlossen. Dann ist C2 mit dem Ausgang des Gleichrichters 16 verbunden (parallel zu C1). Durch die folgende ansteigende Halbwelle der gleichgerichteten Versorgungsspannung wird C2 aufgeladen. Sobald aber die Spannung V_{C2} an der zweiten Kapazität den Referenzspannungswert V_{ref} erreicht, wird der Schalter S geöffnet und die zweite Kapazität abgetrennt, so dass keine weitere Ladung erfolgt. Die zweite Kapazität C2 wird so nie über den Spannungswert V_{ref} hinaus geladen. Daher kann als zweite Kapazität C2 ein Bauteil mit einer Spannungsfestigkeit verwendet werden, die bei oder nur geringfügig über der Referenzspannung V_{ref} liegt.

In Fig. 2 ist ein Teil einer zweiten Ausführungsform einer Netzteilschaltung 20 dargestellt. Gezeigt ist hier nur der an den (auch in Fig. 1 gezeigten) Klemmen A und B angeschlossene rechte Teil der Schaltung, der linke Teil der Netzteilschaltung 20 ist identisch mit dem linken Teil der in Fig. 1 dargestellten ersten Ausführungsform einer Netzteilschaltung 10.

Die zweite Ausführungsform 20 enthält ebenfalls eine erste Kapazität C1 und eine zweite Kapazität C2. Wie bei der ersten Netzteilschaltung 10 ist die zweite Kapazität C2 über die Diode D mit der ersten Kapazität C1 parallel geschaltet, so dass das dort gesagte auch hier gilt.

Anders als die erste Netzteilschaltung 10 enthält die zweite Netzteilschaltung 20 jedoch eine Einrichtung 24 mit einer Zenerdiode DZ in Reihe mit einem Widerstand R zur Realisierung einer Referenzspannungsquelle V_{ref}. Zwischen dem Widerstand R und der Zenerdiode DZ ist der Steuereingang des Feldeffekttransistors T angeschlossen, der in Reihe zur zweiten Kapazität C2 zwischen den Lastanschlüssen 12 geschaltet ist. Durch den Transistor T wird der gesteuerte Schalter S der ersten Ausführungsform einer Netzteilschaltung 10 realisiert. Beim Absinken der Spannung V_{C2} über die zweite Kapazität C2 unter das durch die Durchbruchspannung der Zehnerdiode DZ vorgegebene Spannungsniveau wird Transistor T leitend und ermöglicht die Aufladung der zweiten Kapazität C2 durch die gleichgerichtete Versorgungsspannung.

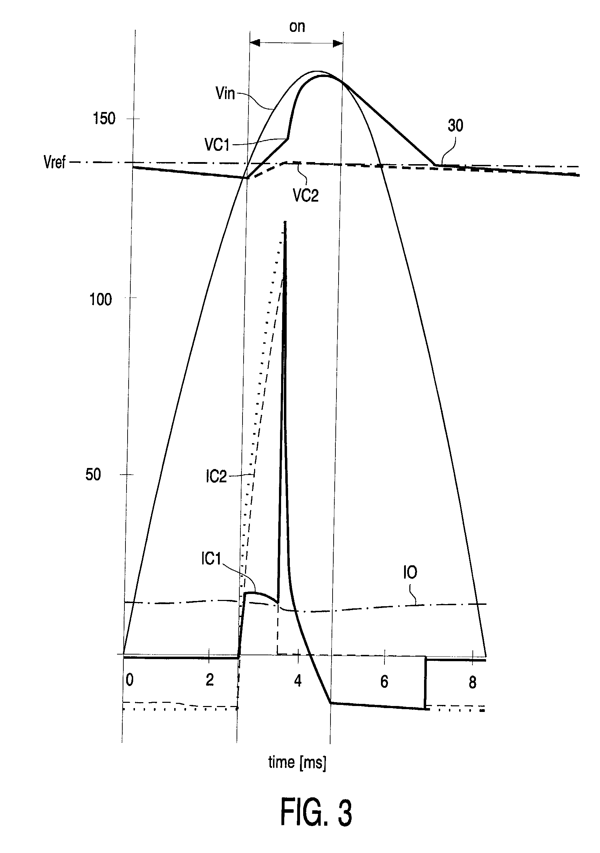

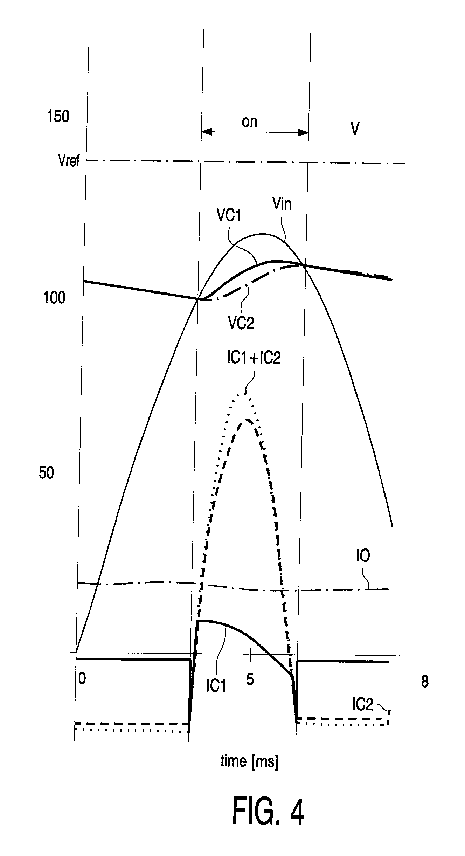

Nachfolgend wird die Funktion der ersten Ausführungsform einer Netzteilschaltung 10 anhand der in Fig. 3 und 4 wiedergegebenen Zeitverläufe beschrieben. Die entsprechenden Erläuterung treffen jedoch in gleicher Weise auf die zweite Ausführungsform 20 zu.

Die dargestellten Zeitverläufe ergeben sich bei Verwendung einer ersten Kapazität C1 von 33 Mikrofarad, 385 V und einer zweiten Kapazität C2 von 330 Mikrofarad, 160 V. Die übrigen Bauteilwerte betragen: L = 0,22 mH, Rₗᵢₘ = 5 Ohm, VZ = 138 V, VZnom = 150 V.

Fig. 3 zeigt eine Darstellung des Zeitverlaufes von Spannungen und Strömen in der Schaltung nach Fig. 1 in einem ersten Betriebsfall. In diesem ersten Betriebsfall wird Netzteileingangsschaltung 10 aus Fig. 1 mit einer sinusförmigen Wechselspannung Vᵢₙ mit einem Effektivwert von 117 V, also einem Spitzenwert von ca. 165 V und einer Frequenz von 60 Hz betrieben. Entsprechend zeigt Fig. 3 in einer dünnen Linie dargestellt eine Halbschwingung der Spannung Vᵢₙ. Mit einer fetten Linie ist in Fig. 3 die Spannung V_{C1} an der ersten Kapazität C1 dargestellt. Nur innerhalb des mittleren Bereichs, der durch einen waagerechten Pfeil mit der Bezeichnung "ON" gekennzeichnet ist, ist die gleichgerichtete Versorgungsspannung Vᵢₙ größer als die Spannung V_{C1} an der ersten Kapazität, so dass ein Strom durch den Gleichrichter 16 fließt.

Betrachtet wird im folgenden der Zeitverlauf der Spannung V_{C1} (fette Linie) und V_{C2} (gestrichelte Linie). Bei Null ms sind beide Spannungen kleiner als die Spannungsschwelle V_{ref} von ca. 140 V. Daher ist Schalter S geschlossen und die Kapazitäten C1, C2 sind parallel geschaltet und entladen sich über die Lastanschlüsse 12 in einer flachen Entladungskurve. Nach dem Ansteigen der positiven Halbwelle der Versorgungsspannung Vᵢₙ über den Spannungswert von V_{C1} und V_{C2} (Beginn des ON-Bereichs), werden die Kapazitäten C1 und C2 aufgeladen. Entsprechend zeigt der Zeitverlauf eine Ladekurve, deren Zeitverlauf durch eine Zeitkonstante entsprechend dem Kapazitätswert und dem Ladewiderstand bestimmt ist. Da hier von einem gewissen Durchgangswiderstand auch des geschlossenen Schalters S ausgegangen werden muss, sind V_{C1} und V_{C2} nicht gleich. Beide Kapazitäten C1, C2 laden sich auf.

Sobald die Spannung V_{C2} an der zweiten Kapazität C2 den Spannungsschwellenwert V_{ref} erreicht, wird Schalter S geöffnet. Die zweite Kapazität C2 bleibt damit auf das Spannungsniveau V_{ref} aufgeladen. Währenddessen wird die erste Kapazität C1 weiter geladen - wegen des durch die Induktivität L stetigen Stroms anfangs sogar sehr schnell.

Nach dem Absinken der Versorgungsspannung Vᵢₙ (rechte Grenze des "ON"-Bereichs) entlädt sich die erste Kapazität C1 zunächst in einer relativ steilen Entladungskurve. Erreicht die Spannung V_{C1} zwischen den Lastanschlüssen 12 den Spannungsschwellenwert V_{ref} (diese Stelle des Zeitverlaufs ist gekennzeichnet durch Bezugszeichen 30) so schaltet die Diode D. Die Kapazitäten C1, C2 sind dann zwischen den Lastanschlüssen 12 parallel geschaltet, so dass sie sich - bei konstanter Leistungsentnahme - in einer deutlich flacheren Entladekurve entladen.

Der in Fig. 3 dargestellte Zeitverlauf setzt sich für den angegebenen Betriebsfall (Spitzenwert der Eingangsspannung Vᵢₙ ca. 165 V) periodisch fort. Insgesamt ergibt sich demnach an den Lastanschlüssen 12 ein periodischer Zeitverlauf der Spannung V_{C1}, der im unteren Bereich durch die zweite Kapazität V_{C2} stark geglättet ist, so dass er nur in relativ geringem Maße unter den Spannungsschwellenwert V_{ref} von ca. 140 V abfällt.

In Fig. 4 ist der Zeitverlauf der Spannungen und Ströme derselben Schaltung noch einmal dargestellt, diesmal jedoch für einen zweiten Betriebsfall. In dem zweiten Betriebsfall wird die Schaltung aus Fig. 1 mit einer geringeren Eingangsspannung Vᵢₙ betrieben, deren Spitzenwert folglich 120 V beträgt. Dies entspricht einem Anschluss an die in USA gemäß den Spezifikationen minimal erlaubte Netzspannung von 85 V effektiv, bei der minimal zulässigen Netzfrequenz von 48 Hz.

Auch beim zweiten Betriebsfall stellt sich ein mit der Eingangsspannung Vᵢₙ periodischer Zeitverlauf ein. Auch hier ist der Zeitverlauf zunächst durch eine Entladekurve der Spannungen V_{C1}, V_{C2} gekennzeichnet. Ab dem Beginn des "ON"-Bereichs werden die beiden Kapazitäten V_{C1}, V_{C2} von der gleichgerichteten Spannung aufgeladen. Nach dem Absinken der gleichgerichteten Spannung (Ende des "ON"-Bereichs) entladen sich die Kapazitäten C1, C2 in einer gemeinsamen Entladekurve über die Lastanschlüsse 12.

Anders als im ersten Betriebsfall nach Fig. 3 liegt das Eingangsspannungsniveau im zweiten Betriebsfall nach Fig. 4 so niedrig, dass der Schalter S stets geschlossen ist und die Kapazitäten C1, C2 entsprechend ständig parallel geschaltet sind. Die hierdurch gelieferte Spannung V_{C1} an den Lastausgängen 12 weist eine sehr geringe Welligkeit auf, da diese Spannung geglättet wird durch die Parallelschaltung der Kapazitäten C1 und C2.

Wie aus dem oben angegebenen Beispiel ersichtlich, wird das gewünschte Ergebnis einer - besonders bezüglich der Minima - gut geglätteten Ausgangsspannung V_{C1} erreicht durch die Kombination einer ersten Kapazität mit geringem Kapazitätswert (aber hoher Spannungsfestigkeit) und einer zweiten Kapazität C2 mit hohem Kapazitätswert, aber geringerer Spannungsfestigkeit. Sowohl hinsichtlich Baugröße als auch hinsichtlich Bauteilkosten ist diese Kombination erheblich günstiger als die Verwendung eines einzigen Kondensators mit sowohl hohem Kapazitätswert als auch hoher Spannungsfestigkeit.

Nachfolgend sollen einige Überlegungen zur Auslegung der Netzteilschaltungen 10, 20, insbesondere zur Wahl des Spannungsschwellenwertes V_{ref} gegeben werden.

Ausgangspunkt derartiger Auslegungen sind die von der Schaltung zu erfüllenden Spezifikationen. Die Eingangsspezifikationen hängen beim Anschluss an das Stromversorgungsnetz von den Netz-Spezifikationen ab. In USA beträgt der Effektivwert der Netzspannung minimal 85 V, nominal 117 V und maximal 140 V. In Europa beträgt der Effektivwert der Netzspannung minimal 189 V, nominal 230 V und maximal 265 V. Folglich gilt für Geräte, die weltweit zum Anschluss an das Stromversorgungsnetz geeignet sein sollen (world-wide-mains), dass von einem Minimalwert von 85 V, einem Nominalwert von 117 V und einem Maximalwert von 265 V ausgegangen werden muss.

Nachfolgend werden für "world-wide-mains"-Betrieb, d.h. Eingangsspannungen mit Effektivwerten von 85 V - 265 V drei Dimensionierungsvorschläge für die Wahl des Ladeschwellenwerts V_{ref} angegeben:
Gemäß dem ersten Vorschlag wird die Spannungsschwelle V_{ref} niedrig gewählt, nämlich bei oder knapp oberhalb des minimalen Spitzenwertes der Eingangsspannung.

Der Vorteil dieser Variante sind die extrem niedrigen Kosten für den zweiten Kondensator, selbst wenn ein Bauteil mit sehr hohem Kapazitätswert gewählt wird.

Ist beispielsweise als minimale Spannung, bei der die Last dauerhaft stationär betrieben werden kann 100 V vorgegeben, so berechnet sich bei 75 Watt Ausgangsleistung eine notwendige Filterkapazität von 270 Mikrofarad. Dies ergibt sich aus der minimalen Spannung, die 85 V effektiv bzw. 120 V Spitzenwert beträgt. Lässt man Bauteiltoleranzen und eventuelle Sicherheitsabstände zunächst außer acht, kann die Spannungsschwelle V_{ref} ebenfalls auf 120 V gesetzt werden. Wenn der Ladewiderstand für die zweite Kapazität hinreichend klein ist, so dass man diese als annähernd parallel geschaltet betrachten kann, kann man C1=47µF, C2=270µF-47µF 220µF wählen. Im Vergleich mit der herkömmlichen Ausführung einer Einzelkapazität von 270 Mikrofarad bei voller Spannungsfestigkeit zeigt sich hinsichtlich der jeweiligen vorzuhaltenden speicherbaren Ladung (Maximalspannung x Kapazität), die grob dem jeweils gesamten Kondensatorvolumen entspricht, eine Reduktion auf gut 40 %. Hinsichtlich der vorzuhaltenden speicherbaren Energien ergibt sich eine Reduktion auf gut 20%. Die Schwelle tiefer zu legen als 120 V führt zu einer geringen Ausnutzung des verbleibenden Spannungshubs, über den allein die Lastversorgung im Bereich der Eingangsspannungsnullstellen erfolgt und würde einen unverhältnismäßig größeren Kondensator C2 erfordern. Eine Schwelle, die sich somit am Scheitelwert der niedrigsten Eingangsspannung orientiert, bedeutet also eine Minimierung des insgesamt nötigen Kondensatorvolumens und entsprechender Kosten.

Bei Betrieb der wie oben skizziert ausgelegten Spannung auf US-Niveau bei höheren Eingangsspannungen als der minimalen Eingangsspannung kann es zudem dazu kommen, dass die Spannungsschwelle mit doppelter Netzfrequenz über- und unterschritten wird. Das hierdurch bewirkte Zu- und Abschalten kapazitiver Ströme kann unerwünscht sein und bei ungünstiger Auslegung Abstrahlungen erzeugen, welche unter Umständen zur Störung umliegender Schaltungsteile führen kann.

Der zweite Vorschlag sieht die Verwendung eines 160 V-Kondensators als zweite Kapazität in Verbindung mit einer Ladespannungsschwelle V_{ref} von ebenfalls ca. 160 V vor. Auch hierbei ergibt sich im Betrieb am US-Netz ein netzsynchrones Schalten des Schalters S bei typischen Eingangsspannungen. Dieses Schalten kann, wie oben beschrieben, für einige Anwendungen unerwünscht sein, wenn hierdurch Störungen auftreten.

Diese periodischen Schaltvorgänge entfallen entsprechend einem dritten Vorschlag bei Wahl einer Spannungsschwelle zwischen dem maximalen Scheitelwert des niedrigeren (hier: US)Spannungsniveaus und dem minimalen Scheitelwert des höheren (hier: europäischen) Spannungsniveaus. Entsprechend dem dritten Vorschlag sollte die Spannungsschwelle für world-wide-mains also zwischen 200 und 260 V betragen. Entsprechend kann als C2 ein Kondensator mit einer Spannungsfestigkeit bei oder knapp oberhalb der gewählten Spannungsschwelle verwendet werden. Der Betrieb bei typischen Eingangsspannungen des US-Netzes wird dann einen Zeitverlauf etwa wie in Fig. 4 wiedergegeben zur Folge haben. Allerdings sind auch die erzielten Einsparungen hinsichtlich Bauteilgröße und Bauelementkosten geringer. Insbesondere bei dieser Wahl der Spannungsschwelle ist es vorteilhaft, einen im Durchgangszustand besonders niederohmigen Schalter S (bzw. Transistor T) von ca. 0,5 bis 2 Ohm, bevorzugt ca. 1 Ohm, zu verwenden, beispielsweise einen Feldeffekttransistor.

Für den "world-wide-mains"-Betrieb hat diese Wahl der Spannungsschwelle den Effekt, dass die zweite Kapazität beim Anschluss an das Netz gemäß US-Spezifikationen ständig aktiv ist, während sie beim Anschluss an das Netz in Europa üblicherweise gar nicht aktiv wird (da hier stets oberhalb der Spannungsschwelle gearbeitet wird).

Innerhalb des angegebenen Bereiches von 200 bis 260 V ist das untere Ende des Bereiches wegen der hier größeren erreichbaren Einsparungen vorzuziehen. Bei einer Wahl von V_{ref}=200 V ergibt sich eine Reduktion der vorzuhaltenden speicherbaren Ladung auf knapp 60 % hinsichtlich der Energie auf knapp 40 %. Ausgehend von den Spezifikationen ist es nicht notwendig, die Spannung im höheren (hier: europäischen) Spannungsniveau zu stützen. Für den Betrieb auf hohem Niveau ist ohnehin ein kleinerer Kondensator ausreichend, im Vergleich zum niedrigen US-Niveau etwa 1 /4 des Kapazitätswertes. Eine beispielhafte Dimensionierung der Bauteile gemäß dem dritten Vorschlag wäre V_{ref} = 200 V, C1 = 47 µF. Bei einer Ausgangsleistung von 75 Watt erreicht die Spannung VC1 minimal einen Wert von 215 V, d.h. die Spannungsschwelle wird im europäischen Netz nie unterschritten (mit Ausnahme der Netzausfälle).

Bei der Verwendung von heute im Handel verfügbaren Bauteilen ist zu beachten, dass diese häufig nur in Baureihen mit festen Spannungsfestigkeiten (z.B. 100 V, 160 V, 200 V) angeboten werden. Da für die Spannung einer Zenerdiode ebenfalls Toleranzen zu berücksichtigen sind, muss der Fachmann bei Anwendung solcher Standardbauteile diese Toleranzen bzw. verfügbaren Bauteilwerte berücksichtigen.

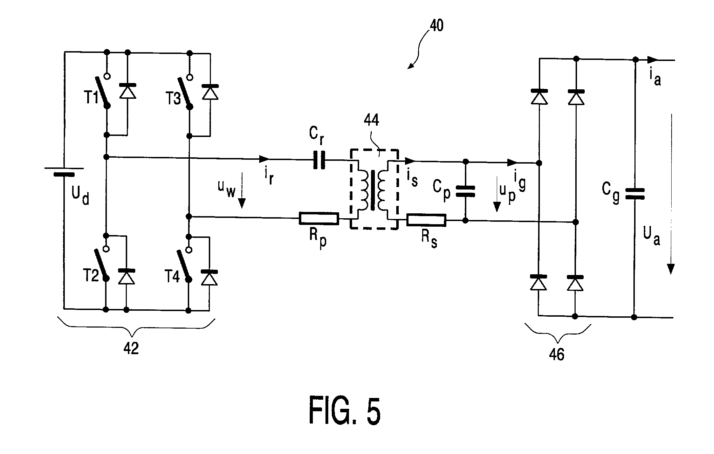

In Figur 5 ist ein Schaltbild eines Schaltnetzteils 40 dargestellt. Das Schaltnetzteil 40 umfasst einen Wechselrichter 42, der die Primärseite eines Transformators 44 speist. Sekundärseitig ist ein Gleichrichter 46 an den Transformator 44 angeschlossen, der eine Ausgangsgleichspannung Uₐ erzeugt. Das Schaltnetzteil nach Figur 5 ist in üblicher, dem Fachmann bekannter Weise als Resonanzanordnung ausgebildet, wobei eine Resonanzkapazität Cᵣ mit der Streuinduktivität des Transformators 44 eine Resonanzanordnung bildet, so dass durch Erzeugung einer pulsweitenmodulierten Spannung u_{W} durch periodisches Schalten der Schalter T1, T2, T3, T4 eine geregelte Ausgangsspannung Uₐ erzeugt werden kann.

Diese und andere Schaltungen für Schaltnetzteile sind dem Fachmann bekannt und brauchen daher nicht näher erläutert werden.

In Figur 5 wird der Umrichter 42 durch eine Gleichspannungsquelle U_{d} gespeist. Bei Anschluss des Schaltnetzteils 40 an das Stromversorgungsnetz wird für die Gleichspannungsquelle U_{d} die erste Ausführungsform einer Netzteilschaltung 10 oder die zweite Ausführungsform einer Netzteilschaltung 20 eingesetzt, wobei als Last an die jeweiligen Lastanschlüsse 12 der Umrichter 42 angeschlossen wird. In diesem Fall bildet die Netzteilschaltung 10, 20 eine Netzteileingangsschaltung innerhalb des Schaltnetzteils 40.

Die Erfindung lässt sich dahingehend zusammenfassen, dass eine Netzteilschaltung und ein Schaltnetzteil mit einer Netzteileingangsschaltung vorgestellt werden. Bekannte Netzteilschaltungen weisen einen mit einer Wechselspannung gespeisten Gleichrichter und eine erste Glättungskapazität auf. Um eine Schaltung anzugeben, die zum Betrieb über einen weiten Spannungsbereich geeignet ist, wird vorgeschlagen, dass mindestens eine zweite Kapazität vorgesehen ist, die durch ein Schaltelement so mit den Lastanschlüssen verbunden ist, dass beim Absinken der Spannung an den Lastanschlüssen unter eine Spannungsschwelle die zweite Kapazität mit den Lastanschlüssen verbunden wird. Weiterbildungen umfassen eine Einrichtung zur Ladung der zweiten Kapazität, die bevorzugt mit einer Einrichtung zur Begrenzung der Spannung an der zweiten Kapazität auf einen Ladeschwellenwert ausgerüstet ist. Durch geeignete Wahl des Ladeschwellenwertes kann als zweite Kapazität ein Kondensator verwendet werden, der trotz des hohen Kapazitätswertes aufgrund der relativ niedrigen Spannungsfestigkeit eine geringe Baugröße und geringe Bauteilkosten aufweist.

## Patentansprüche

1. Netzteilschaltung mit einem durch eine Wechselspannung (Vᵢₙ) gespeisten Gleichrichter (16)
- und einer ersten Glättungskapazität (C1) zur Glättung der durch den Gleichrichter (16) gelieferten gleichgerichteten Spannung,
- und Lastanschlüssen (12), an denen die gleichgerichtete und geglättete Spannung (V_{C1}) anliegt,
**dadurch gekennzeichnet,**
**dass**
- mindestens eine zweite Kapazität (C2) vorgesehen ist,
- die durch ein Schaltelement (D) so mit den Lastanschlüssen (12) verbunden ist, das beim Absinken der Spannung (V_{C1}) an den Lastanschlüssen (12) unter eine Spannungsschwelle (V_{C2}) die zweite Kapazität (C2) mit den Lastanschlüssen (12) verbunden wird.

2. Netzteilschaltung nach Anspruch 1, bei dem
- das Schaltelement eine Diode (D) ist,
- und die Spannungsschwelle die an der zweiten Kapazität (C2) jeweils anliegende Spannung (V_{C2}) ist.

3. Netzteilschaltung nach einem der vorangehenden Ansprüche, bei der
- eine Einrichtung (14, 24) zur Ladung der zweiten Kapazität (C2) vorgesehen ist.

4. Netzteilschaltung nach Anspruch 3, bei der
- die Ladeeinrichtung (14, 24) eine Einrichtung zur Begrenzung der Spannung an der zweiten Kapazität (C2) auf einen Ladeschwellenwert (V_{ref}) aufweist.

5. Netzteilschaltung nach Anspruch 3 oder 4, bei der
- die Ladeeinrichtung (14, 24) eine Schalteinheit (S, T) umfasst,
- die, wenn die Spannung (V_{C2}) an der zweiten Kapazität (C2) einen Ladeschwellenwert (V_{ref}) unterschreitet, die zweite Kapazität (C2) mit der gleichgerichteten Spannung verbindet, so dass die zweite Kapazität C2 aufgeladen werden kann,
- und wenn die Spannung an der zweiten Kapazität (C2) den Ladeschwellenwert (V_{ref}) überschreitet, die zweite Kapazität (C2) von der gleichgerichteten Spannung trennt.

6. Netzteilschaltung nach Anspruch 4 oder 5, bei der
- die Netzteilschaltung (10, 20) für einen Eingangsspannungsbereich mit einer Minimal-Eingangsspannung und einer Maximal-Eingangsspannung ausgelegt ist,
- wobei der Ladeschwellenwert (V_{ref}) über dem Spitzenwert der Minimaleingangsspannung liegt.

7. Netzteilschaltung nach einem der Ansprüche 4 bis 6, bei der
- die Netzteilschaltung (10, 20) für einen Eingangspannungsbereich mit einer Minimal-Eingangsspannung und einer Maximal-Eingangsspannung ausgelegt ist,
- wobei der Ladeschwellenwert (V_{ref}) unter dem Spitzenwert der Maximal Eingangsspannung liegt.

8. Netzteilschaltung nach einem der Ansprüche 4 bis 7, bei der
- der Ladeschwellenwert (V_{ref}) so hoch gewählt ist, dass im Nennbetrieb die Spannung (V_{C1}) an den Lastanschlüssen (12) mindestens einmal pro Periode kleiner ist als der Ladungsschwellenwert (V_{ref}).

9. Netzteilschaltung nach einem der Ansprüche 3 bis 8, bei der
- die Schaltung für den Betrieb an mindestens zwei Netzspannungsbereichen ausgelegt ist,
- wobei ein erster, niedrigerer Netzspannungsbereich mindestens durch minimale und maximale Scheitelwerte der Netzeingangsspannung spezifiziert ist,
- und ein zweiter, höherer Netzspannungsbereich ebenfalls mindestens durch einen Minimal- und einen Maximalwert für den Scheitelwert der Netzeingangsspannung spezifiziert ist,
- wobei die Spannungsschwelle (V_{ref}) so gewählt ist, dass sie gleich oder höher ist als der Scheitelwert der maximalen Spannung im ersten, niedrigeren Spannungsbereich,
- und kleiner oder gleich dem Scheitelwert der minimalen Spannung des zweiten, höheren Spannungsbereiches.

10. Schaltnetzteil mit
- mindestens einer Netzteileingangsschaltung (10, 20) zum Anschluss an eine Wechselspannungsversorgung (Vᵢₙ) und zur Bereitstellung einer Zwischenkreisspannung,
- und mindestens einem durch die Zwischenkreisspannung gespeisten Umrichter,
**dadurch gekennzeichnet,**
**dass**
- die Netzteileingangsschaltung (10, 20) nach einem der Ansprüche 1 bis 9 aufgebaut ist.
